# EUROPEAN PATENT APPLICATION

(11) **EP 1 980 778 A2**
(43) Date of publication of application: **15.10.2008**
(21) Application number: 08251015.7
(22) Date of filing: 20.03.2008
(51) Int. Cl.: F16L 1/24, F16L 3/10, F16L 3/13

(54) **Pipe clamp**

(30) Priority: 11.04.2007 GB 0706989
(71) Applicant: Balmoral Group Limited, Loirston Aberdeen City AB12 3GY (GB)
(72) Inventor: Stokes, Kevan Frederick, Aberdeen, AB12 4QG (GB)
(74) Representative: Crosby, Wendy Agnes

(57) **Abstract**

A clamp device suitable for attachment to a riser comprises
a clamp body comprising a plurality of segments (210, 220, 230, 240); an elastomer hinge (310) provided between adjacent segments and
extending over an outer surface (205) of the segments; a tensioning band (200) having a connector (285) at each end, and fastening means (295) to draw the connectors together to tension the band.

## Description

This invention relates to a clamp device for securing buoyancy elements to underwater flowlines.

In order to extract hydrocarbons from subsea wells, flowlines, often referred to as risers, extend from a wellhead to a surface facility, such as an oil rig. Risers are flexible and bend in response to prevailing underwater conditions. To manufacture flexible risers it is necessary to have an inner tube/ tensile layers and an outer plastic sheath for protection from the sea. This sheathing has a low coefficient of friction with the inner tube of the riser and so is relatively delicate.

In order to isolate subsea terminations from the effects of vessel movement under weather and tide effects, buoyancy modules are used to create particular configurations of risers, for example configurations known as 'Lazy S', Lazy Wave', 'Lazy W', between a Floating Production Storage and Offtake (FPSO) vessel and the seabed or floating subsea structure.

Moreover, the weight of the risers and hydrocarbons therein could be supported by the surface facility but would require strong risers and connections to maintain the integrity of a long string of risers. It is thus more economic to attach buoyancy elements to the risers to provide additional support.

Distributed buoyancy modules with internal clamps have been used to reduce the suspended weight on rigid flowlines (steel pipes) where these are used as catenary risers between seabed structures and a surface facility where current and wave conditions do not require the Lazy S/W configurations. Such pipelines are susceptible to compression and creep of the insulation coatings which are applied to the outer surface of the risers.

Rigid flowlines laid on the seabed may also be fitted with clamps and modules to reduce the submerged weight of the flowline and to facilitate lateral or vertical movement of that section, to allow for flowline expansion when the pipeline heats up during operation with hot fluids.

Clamps can be used to fit around the riser and provide a mounting for a buoyancy element. However the attachment of the clamp must be done carefully since the sheath on the riser is liable to tear away from the underlying tensile layers of the riser if attachments thereto are over-tensioned. It is possible to make a rigid bodied clamp that is a perfect fit on a riser (the very earliest clamps were individually bored from aluminium castings to match particular locations on a riser) but it is expensive and not very practical as actual diameter of a flexible riser in practice can easily exceed +/- 3% of a given diameter.

In any case, the changes in internal and external pressure and temperature of the riser can result in a variance in the diameter of the riser and affect its connection to a clamp. Moreover the bending and strains which occur in risers in use further hinder the correct dimensioning of rigid clamps. As a result manufacturing clamps with an exact fit for the flowlines was difficult and expensive and such clamps were in any case subject to failure due to the *in situ* variance in riser diameter.

A number of further clamps have been developed to mitigate these problems. One known clamp disclosed in GB2,391,255 comprises a series of clamp segments shaped to fit around a riser, and a band with bars at either end. The band is wrapped around the clamp body, which is in turn arranged around the riser. The bars are bolted together in order to tension the band around the clamp segments and attach the clamp under tension to the riser. The buoyancy element can then be attached to the clamp.

Although somewhat satisfactory, performance limitations are constantly being challenged with demands for clamps to cope with larger buoyancy loads and deployment in rougher sea states, and to accommodate larger riser strains and tighter riser bend radii and high rates of change of these radii.

However, increasing the load capacity is limited by the low coefficient of friction between the outer sheath of the riser and the tensile layers.

According to a first aspect of the present invention there is provided a clamp device suitable for attachment to a riser, the clamp comprising:
a clamp body comprising a plurality of segments; an elastomer hinge provided between adjacent segments and extending over an outer surface of the segments; a tensioning band having a connector at each end, and fastening means to draw the connectors together to tension the band.

The elastomer hinge allows the clamp frame to be hinged open when mounting on a riser which ensures that the alignment of the segments is maintained during the mounting operation.

Preferably the elastomer hinge is formed by a plastic coating applied over the clamp body. More preferably, the plastic coating comprises polyurethane.

Alternatively, substitute materials such as cast elastomeric materials such as polyurea, silicone rubber, polybutadiene, heaet-cure PVC plastisol, or polysulphide may be used.

Preferably the plastic coating is formed as a jacket surrounding an outer convex face of the body.

Advantageously the jacket covers the upper and lower regions of the outer face of the frame whilst leaving the centre region uncovered.
This provides a recess for the tensioning band to surround the frame without having to form a recess into the body of the frame to locate the band.

Preferably the segments have an inner concave face and a layer of resilient material is applied to said face. In use, the resilient material is provided between the body and the riser.

### Typically the resilient material is a rubber material such as natural rubber

Preferably the resilient material has a thickness of at least 20mm, preferably at least 25mm thick.

Preferably the resilient material is of a thickness of 5-15% of that of the riser, more preferably 8-12% of the thickness of the riser.

Preferably the clamp is made from a material which has a higher axial strength than radial or hoop strength.

Preferably a buoyancy element is secured to the riser via the clamp.

Thus the invention provides an apparatus comprising a clamp as described herein and a buoyancy module.

The invention also provides a riser apparatus comprising a clamp as described herein and a buoyancy module and a riser.

Embodiments of the present invention will now be described, by way of example only, with reference to the accompanying drawings, in which:
Fig. 1 is an end elevation of a clamp according to one embodiment of the present invention;
Fig. 2 is a cross sectional view of two segments of the clamp of Fig. 1;
Fig. 3 is a side view of the clamp of Fig. 1, and
Fig. 4 is a perspective view of the clamp of Fig. 1 installed on a riser.

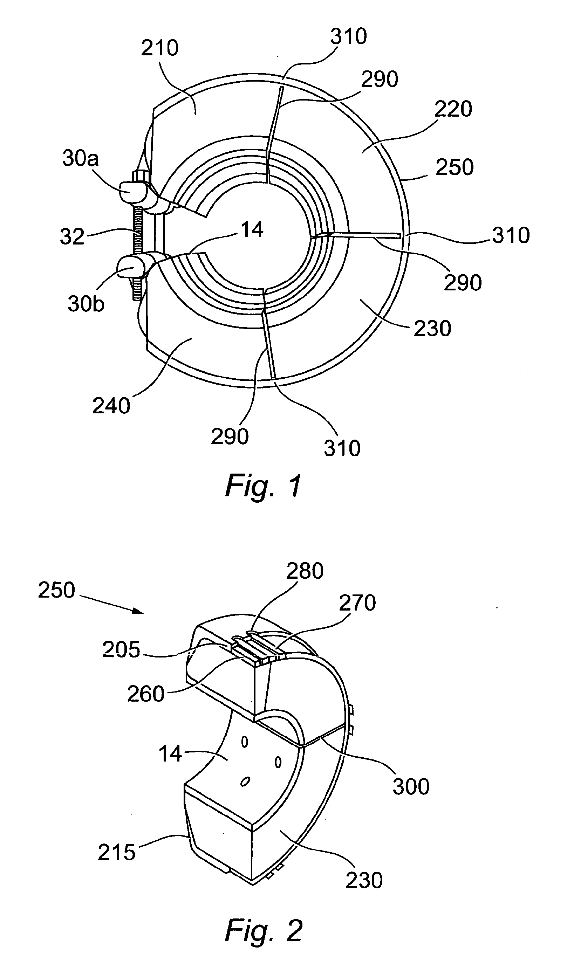

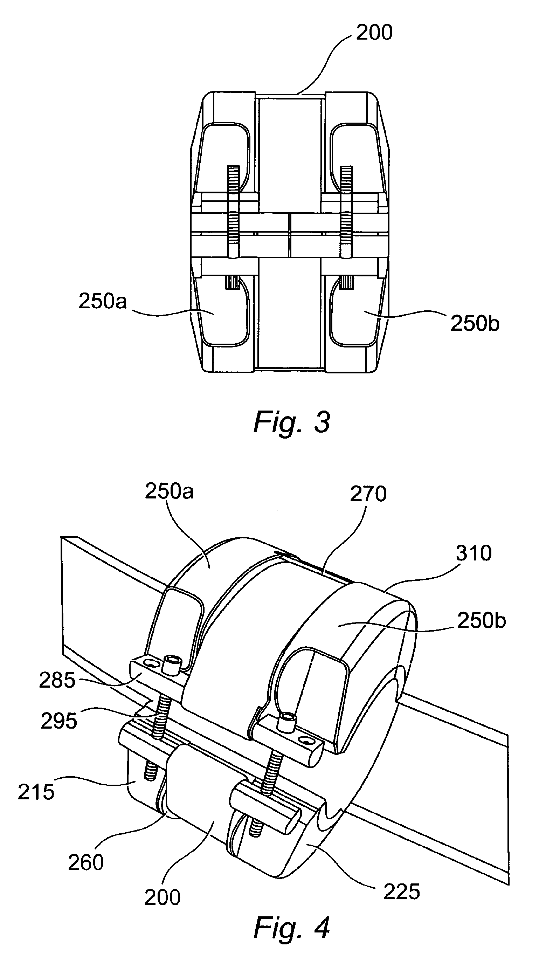

One embodiment of the clamp is shown in Figs. 1-4. In this embodiment, the clamp has four segments 210, 220, 230, 240 although other numbers of segments are also envisaged. A plastics jacket 250 is formed over the clamp segments. Preferably the jacket comprises polyurethane which is moulded in place or sprayed onto the segments although other materials such as cast elastomeric materials including polyurea, silicone rubber, polybutadiene, heaet-cure PVC plastisol, or polysulphide may be used.

The jacket extends over the outer convex face 205 of the segments and also the top and bottom faces 215, 225 of the segments. In the embodiment shown, the jacket extends over substantially the entire top and bottom faces of the segments. However, the amount of coverage may vary depending upon the operational requirements of the clamp and in some embodiments the jacket may only cover the outer convex face of the segments.

The jacket may be formed in two sections 250a, 250b as shown, one covering the upper region of the outer convex face and extending over the top surface and the other covering the lower region of the outer convex face of the segments and extending over the bottom surface. In this embodiment, the jacket leaves a central circumferential region 260 of the outer convex face uncovered to provide a recess to receive the band 200.

One or more locating means 270 may be formed into the jacket 250 to assist in holding the band in place within the recess. The locating means may be a bar or strap which extends between corresponding fixing points 280 in the two sections of the jacket. In the embodiment shown, the fixing points are one or more detents in the outer surface of the jacket which receive an end of the bar or strap. The bar or strap may be push fit into position within the detents.

Providing a circumferential recess 260 in the jacket to accommodate the band 200 avoids the need for the clamp frame to be provided with radially extending lugs with bars mounted between the lugs and therefore reduces the overall complexity of the clamp. Furthermore, by providing the recess for the band in the elastomer jacket, this avoids the need to mould or machine such a recess into the body of the clamp segments.

In this embodiment, the ends of the band 200 are formed with a loop or other such pocket to receive a connector 285. Each connector has one or more aligned apertures to receive a fastening means 295 which can pass through the apertures to span the connectors. In the embodiment shown, the fastening means is a threaded bolt which is inserted through the apertures and held in position either by corresponding threads in one or both of the connectors, or alternatively by a nut threaded onto the bolt. As the fastening means is tightened, the connectors are drawn together to tension the band 200.

One or more radial slits 290 are formed in the jacket 250 where it extends over the top and bottom faces of the segments. The slit corresponds in position to adjacent side faces 300 of adjacent clamp segments. In the embodiment shown, where 4 clamp segments are provided, 3 slits are formed in the jacket.

The slits 290 extend towards but do not impinge on the region of the jacket 250 which surrounds the convex outer surface 205 of the segments. The jacket thus provides an elastomer hinge 310 between adjacent clamp segments 210, 220, 230, 240 which allows the clamp to be more easily mounted on a riser by maintaining alignment of the clamp segments.

The jacket 250 also acts as a load distribution layer to avoid damage to the less robust buoyancy segments during launch.

In a further embodiment, the jacket may be formed in a single section covering the entire outer surface of the segments. In this case, the recess may be moulded into the jacket to receive the band 200.

In a further embodiment of the invention a layer of resilient material such as for example rubber may be provided on the inner concave face of the clamp segments such that in use this layer of resilient material is between the clamp body and the riser. This layer of material assists in compensating for the changes in diameter of a riser during operation.

By placing the layer of material next to the riser rather than outside a substantially rigid clamp body, this allows the clamp to accommodate significantly higher riser bending without increasing the load in the bolts and locally stiffening the riser.

## Claims

1. A clamp device suitable for attachment to a riser, the clamp comprising a clamp body comprising a plurality of segments; an elastomer hinge provided between adjacent segments and extending over the outer surface of the segments; a tensioning band having a connector at each end, and fastening means to draw the connectors together to tension the band.

2. A clamp device according to claim 1, wherein the elastomer hinge is formed by a plastic coating applied over the clamp body.

3. A clamp device according to claim 1 or 2, wherein the plastic coating comprises Polyurethane.

4. A clamp device according to claim 1 or 2, wherein the plastic coating comprises a material chosen from the group consisting of cast elastomeric materials such as polyurea, silicone rubber, polybutadiene, heaet-cure PVC plastisol, or polysulphide.

5. A clamp device according to any one of the preceding claims, wherein the plastic coating is formed as a jacket surrounding an outer convex face of the frame.

6. A clamp device according to claim 5, wherein the jacket covers the upper and lower regions of the outer face of the frame whilst leaving the centre region uncovered.

7. A clamp device according to any one of claims 1-6, wherein the segments have an inner concave face and a layer of resilient material is applied to said face.

8. A clamp device according to claim 7, wherein the resilient material is a rubber material such as natural rubber

9. A buoyancy element secured to a riser via a clamp device according to any one of claims 1-8.

10. An apparatus comprising a clamp according to any one of claims 1 - 8 and a buoyancy module.

11. A riser apparatus comprising a clamp according to any one of claims 1-8 and a buoyancy module and a riser.

12. A clamp device substantially as hereinbefore described with reference to and as shown in the accompanying drawings.
